# EUROPÄISCHE PATENTSCHRIFT

(11) **EP 2 587 955 B1**
(45) Veröffentlichungstag und Bekanntmachung des Hinweises auf die Patenterteilung: **20.08.2014**
(21) Anmeldenummer: 10747501.4
(22) Anmeldetag: 30.06.2010
(51) Int. Cl.: A44C 5/12, A44C 5/02, A44C 27/00, A44C 9/00

(54) **SCHMUCKSTÜCK MIT VERÄNDERBARER FORM**
VARIABLE-SHAPE PIECE OF JEWELLERY
BIJOU DE FORME VARIABLE

(43) Veröffentlichungstag der Anmeldung: 08.05.2013
(73) Patentinhaber: 18 KT. JMG SRL, 39100 Bolzano (BZ) (IT)
(72) Erfinder: MANTOVANI, Giovanni, I-39100 Bolzano (BZ) (IT)
(86) Internationale Anmeldenummer: PCT/IT2010/000289
(87) Internationale Veröffentlichungsnummer: WO 2012/001713

(56) Entgegenhaltungen:
- EP-A1- 1 166 676
- EP-A2- 1 566 111
- FR-A1- 2 594 234
- JP-A- 2001 286 313
- US-A- 1 403 600

## Beschreibung

Die Erfindung bezieht sich auf ein Schmuckstück gemäß dem Oberbegriff des Anspruches 1.

Es wäre wünschenswert, dass die Person, die ein Schmuckstück benutzt, die Form des Schmuckstücks nach Wunsch vorübergehend und in reversibler Weise verändern könnte, weil man in einem solchen Fall durch die Benutzung des selben Schmuckstückes jeweils verschiedene Verzierungseffekte erhalten könnte. Diesbezüglich ist es naheliegend, dass um so mehr das Material aus dem die metallische Tragstruktur hergestellt wird elastisch ist, um so größer die Möglichkeit ist die Form des Schmuckstückes zu verändern, ohne dass dabei bleibende Verformungen entstehen.

Hinsichtlich elastischer Materialen ist eine Vielzahl von metallischen Legierungen mit Formgedächtniseffekt bekannt, die sogenannten SMAs (Shape Memory Alloys) in englischer Sprache. Diese metallischen Legierungen zeichnen sich dadurch aus, dass sie zwei verschiedene physische Zustände (martensitischer Zustand und austenitischer Zustand) aufweisen, je nachdem ob sich das Material über oder unter der sogenannten Wandlungstemperatur befindet. Eine Formgedächtnislegierung (Shape Memory Alloy) ist unter der Wirkung einer Belastung leicht verformbar wenn sie sich in dem ersten physischen Zustand befindet, hingegen wenn sie sich in dem zweiten physischen Zustand befindet neigt sie dazu eine ursprüngliche vorbestimmte Form zu behalten oder wieder einzunehmen und wirkt, unter Erzeugung einer beträchtlichen Rückstellkraft, jeder Veränderung dieser ursprünglichen vorbestimmten Form entgegen. Dieses besondere Verhalten dieser Formgedächtnislegierungen (Shape Memory Alloys) ist als superelastisches Verhalten bekannt, wobei damit die Fähigkeit der Legierung zu verstehen ist, in absolut elastischer Weise, also ohne bleibende Verformungen zu erleiden, wieder zu ihrer ursprünglichen vorbestimmten Form zurückzukehren, auch nachdem sie extreme Veränderungen ihrer Form erlitten hat.

Es ist seit langer Zeit ein Schmuckstück bekannt, das eine metallische Tragstruktur aufweist, die aus einem dünnen und aus einem wertvollen Metall oder aus Stahl bestehenden Materialstreifen besteht, auf dem reihenweise eines nach dem anderen eine Merhzahl von Verkleidungselemente aufgefädelt ist. Diese Verkleidungelemente, mit denen die Verzierung des Schmuckstückes hergestellt wird, weisen eine durchgehende einen rechteckigen Querschnitt aufweisende Öffnung auf, durch welche sich die metallische Tragstruktur hindurch ertreckt, sodaß die Verkleidungselemente auf sie aufgefädelt sind. Eines, mehrere oder auch alle Verkleidungselemente können aus Verzierungsgründen zusätzlich zumindest einen Sitz aufweisen, um stationär ein Verzierungselement, zum Beispiel einen Edelstein, aufzunehmen.

Bei diesem Schmuckstück ist die Tragstruktur insbesondere schraubenförmig. Aufgrund dieser besonderen schraubenförmige Form ist eine geringe Elastizität vorhanden, die es erlaubt die Windungen der Schraube ein bisschen zu erweitern, um die Hand oder einen Finger leichter hindurchzuführen, je nachdem ob es sich um ein Armband oder um einen Ring handelt. Bei diesem bekannten Schmuckstück ist es aber nicht möglich seine ursprügliche Form vorübergehend und in reversibler Weise zu verändern, zum Beispiel damit es eine andere schraubenförmige Form annimmt, die wegen der Steigung, der Größe oder der Anzahl der Windungen verschieden ist, oder sogar damit es eine Form annimmt die zumindest teilweise anders als die ursprüngliche ist, weil in einem solchen Fall die geringe Elastizität der metallischen Tragstruktur bleibende Verformungen mit sich bringen würde.

Es muss bemerkt werden, dass die Herstellung der bekannten metallischen streifenförmigen Tragstruktur aus einer Formgedächtnislegierung (Shape memory Alloy) anstatt aus einem wertvollen Metall oder aus Stahl nicht eine absolute Gestaltungsfreiheit gewährleisten würde, und zwar wegen des eckigen, in der Regel rechteckigen, Querschnittes der metallischen Tragstruktur. Ein solcher eckiger Querschnitt ist nämlich gegenüber den verschiedenen theoretisch möglichen Bewegungen mit vielen Bindungsgraden verbunden, wobei aber ein solcher Querschnitt zwingend ist wenn man verhindern will, dass die Verkleidungselemente, die eine durchgehende Öffnung mit entsprechendem also eckigem Querschnitt aufweisen, sich das eine gegenüber dem anderen um die metallische Tragstruktur herum drehen. Eine solche Drehung würde das Verzierungsmuster beschädigen, das durch die Verkleidungselemente und/oder die Verzierungselemente, die in den gegebenenfalls auf den Verkleidungselementen vorgesehenen Sitzen gelagert sind, erzeugt wird. Man könnte eine absolute Bewegungsfreiheit erreichen, wenn man, anstelle einer metallischen Tragstruktur mit eckigem Querschnitt, also eines Materialstreifens, als metallische Tragstruktur einen einzigen aus einer Formgedächtnislegierung (Shape Memory Alloy) hergestellten Faden vorsehen würde. In diesem Fall wären alle Bewegungen möglich, aber auf Kosten der Beibehaltung des Verzierungseffekts der über die Verkleidungselemente und/oder die Verzierungselemente, die in den gegebenenfalls auf den Verkleidungselementen vorgesehenen Sitzen gelagert sind, erzeugt wird, weil in einem solchen Fall die Verkleidungselemente frei wären sich das eine gegenüber dem anderen um diesen Faden herum zu drehen und man würde somit den Verzierungseffekt des Schmuckstückes beeinträchtigen. Um Abhilfe zu leisten, müsste man jedes Verkleidungselement an dem Faden befestigen, zum Beispiel verschweißen, aber auf dieser Weise würde man wieder die Bewegungsfreiheit beschränken, weil man jene kleine gegenseitige Annäherungs- und Entfernungsbewegungen zwischen den Verkleidungselementen verhindern würde, die von diesen beim Gleiten auf der metallischen Tragstruktur durchgeführt werden und notwendig sind, um zu erlauben dass die metallische Tragstruktur gebogen werden kann.

### Stand der Technik

EP 1 166 676 A1 zeigt ein Armband für eine Uhr das eine metallische Tragstruktur und eine Mehrzahl von Verkleidungselementen umfasst, die reihenweise das eine nach dem anderen auf der metallischen Tragstruktur angeordnet sind, wobei jedes Verkleidungselement eine durchgehende Öffnung aufweist durch welche die metallische Tragstruktur sich hindurch erstreckt, sodass die Verkleidungselemente auf der metallischen Tragstruktur aufgefädelt sind, wobei die metallische Tragstruktur aus einem Paar Fäden besteht die einer neben dem anderen angeordnet sind und nur im Bereich deren Enden miteinander verbunden, insbesondere verschweisst, sind, wobei die durchgehende Öffnung jedes Verkleidungselements aus einem Paar von nebeneinander liegenden Löcher besteht und wobei sowohl das erste Verkleidungselement als auch das letzte Verkleidungselement der angereihten Verkleidungselemente zusätzlich mit den Fäden verbunden ist, insbesondere verschweisst ist, während die übrigen Verkleidungselemente der angereihten Verkleidungselementen nur frei auf dem Paar Fäden aufgefädelt sind und längs ihnen gleiten können.

Die Benutzung von metallischen Formgedächtnislegierungen (Shape Memory Alloys) im Schmuckwarenbereich ist schon bekannt, wie aus den Dokumenten FR 2 594 234 A1, EP 1 238 600 und DE 199 34 312 hervorgeht.

FR 2 594 234 A1 zeigt eine Brillenstange bei der die Eigenschaften einer Formgedächtnislegierung (Shape Memory Alloy) im Zusammenhang mit der Veränderung der Form der Brillenstange genutzt werden. Die metallische Tragstruktur der Brillenstange besteht teilweise aus einem Faden aus einer Formgedächtnislegierung, auf dem reihenweise das eine nach dem anderen Verkleidungselemente angeordnet sind, wobei jedes Verkleidungselement eine durchgehende Öffnung aufweist durch welche der Faden sich hindurch erstreckt, sodass die Verkleidungselemente auf dem Faden aufgefädelt sind.

Bei dem europäischen Patent EP 1 238 600 werden die Eigenschaften dieser Art von Formgedächtnislegierungen (Shape Memory Alloys), die man nachfolgend kurz SMAs bezeichnen wird, dazu genutzt bewegliche Teile eines Schmuckstückes zu bewegen. Bei dem Schmuckstück, das in diesem Dokument beschrieben wird, ist ein aus einer SMA hergestelltes Element vorgesehen, das sich in der Regel in dem martensitischen Zustand befindet und von einer Feder beaufschlagt wird, um es in einer vorgegebenen Form zu halten, die gegenüber der ursprünglichen vorbestimmten Form verschieden ist. Wenn dann, aufgrund eines Temperaturwechsel, das aus einer SMA hergestellte Element in den austenitischen Zustand übergeht, nimmt es dank der Rückstellkräfte die dabei erzeugt werden und die größer als die Kraft der Feder sind, die ursprüngliche vorbestimmte Form an. Die Bewegung die dabei durchgeführt wird, wird dazu genutzt die Flügel eines vogelförmigen Anhängers zu öffnen oder die Blütenblätter eines blumenförmigen Schmuckstücks zu öffnen. Sobald die Temperatur wechselt und der physische Zustand des aus einer SMA hergestellten Elements wieder der martensitische Zustand ist, bringt die Kraft der Feder das aus einer SMA hergestellte Element wieder in seine besagte vorgegebene Form zurück, die gegenüber der ursprünglichen vorbestimmten Form verschieden ist, und die diesbezügliche Bewegung die daraus entsteht wird dazu genutzt die Flügel des Vogels oder die Blütenblätter der Blume zu schliessen. Dieser Ablauf wiederholt sich bei jede Änderung des physischen Zustands des aus einer SMA hergestellten Elements.

Bei diesem bekannten Schmuckstück ist aber keine freie Möglichkeit vorhanden, die Form des Schmuckstückes zu verändern, weil dieses, unter anderem automatisch, nur zwei verschiedene aber genau vorgegebene Formen annehmen kann.

Bei dem Schmuckstück, das in dem deutschen Patent DE 199 34 312 beschrieben ist, ist ein Anhänger vorgesehen, dessen metallische Tragstruktur die Form eines Käfigs aufweist und dieser Käfig besteht aus einer Mehrzahl von Stegen die aus einer SMA hergestellt sind. Die Tatsache, dass besagte Stege aus einer SMA hergestellt sind, ermöglicht es, dank des superelastischen Verhaltens der aus einer SMA hergestellten Stege, einen Spalt zwischen den Stegen zu erweitern, gegebenenfalls durch Dehnung der Stege, um in den Käfig ein oder mehrere Verzierungselemente einzubringen, die dann, infolge der elastischen Rückkehr der Stege in der Ausgangsstellung, sicher in dem Käfig gehalten werden. Eine zweite Ausführungsform die in diesem Dokument beschrieben ist sieht die Erzeugung einer rohrförmigen Halskette vor, indem Fäden die aus einer SMA hergestellt sind unter Bildung von breiten Maschen miteinander geflochten werden. Um die Verzierungselemente in die Halskette einzubringen, wird auch in diesem Fall ein Freiraum zwischen den Maschen erweitert, Freiraum der sich dann elastisch wieder schließt, sodass die Verzierungselemente gehalten werden. Die Verzierungselemente können somit leicht ausgetauscht werden, zum Beispiel um den Verzierungseffekt des Schmuckstückes zu verändern.

Bei diesem bekannten Schmuckstück ist aber nicht einmal eine kleinste Möglichkeit vorhanden das Schmuckstück anders zu gestalten, weil dessen Form nicht veränderbar ist.

### Darstellung der Erfindung

Ausgehend von einem Schmuckstück wie jenem das im Oberbegriff des Patentanspruchs 1 beschrieben ist, ist es die Aufgabe der vorliegenden Erfindung die oben erläuterten Probleme zu lösen, indem ein Schmuckstück mit veränderbarer Form zur Verfügung gestellt wird, das vorübergehend und in reversibler Weise in seiner Form veränderbar ist und eine Mehrzahl von Formen annehmen kann die weitgehend anders als eine eigene ursprüngliche vorbestimmte Form sind. Bei diesen Formveränderungen muss darüber hinaus der Verzierungseffekt des Schmuckstückes nicht aufgrund unerwünschten gegenseitigen Bewegungen der Verkleidungselementen um die metallische Tragstruktur des Schmuckstückes herum beeinträchtigt werden.

Bei einem Schmuckstück gemäß dem Oberbegriff des Anspruches 1 wird diese Aufgabe dadurch gelöst, dass das Schmuckstück zusätzlich die Merkmale des kennzeichnenden Teiles des Anspruchs 1 aufweist.

Die in dem kennzeichnenden Teil des Anspruches 1 beanspruchten Merkmale erlauben es zugleich sowohl eine absolute Bewegungsfreiheit, und daher eine absolute Gestaltungsfreiheit des Schmuckstückes, zu erreichen als auch die Verkleidungselemente in Position gegenüber der metallischen Tragstruktur zu halten.

Die absolute Bewegungsfreiheit, die das Ziel der Erfindung ist, ist dank der besonderen metallischen vorgesehenen Tragstruktur gegeben, die aus einem Paar Fäden besteht, die aus einer sogenannten metallischen Formgedächtnislegierung (Shape Memory Alloy) hergestellt sind und einer neben dem anderen angeordnet sind. Ein solches Paar von Fäden weist, dank seiner superelastischen Eigenschaften die zuvor erläutert wurden, eine unbegrenzte Fähigkeit jeweils, unter der Wirkung der Person die das Schmuckstück trägt, verschiedene Formen anzunehmen die anders als eine ursprüngliche vorbestimmte Form sind. Darüber hinaus, die Tatsache, dass die beiden die durchgehende Öffnung jedes Verkleidungselements bildenden und nebeneinander liegenden Löcher erfindungsgemäß auf der inneren Seite miteinander in Verbindung stehen und daher keine interne Seitentrennwand aufweisen, verhindert, wie es notwendig ist, eine Drehung der Verkleidungselementen um das Paar von Fäden herum und ermöglichtes die Abmessungen der metallischen Tragstruktur des Schmuckstückes zu reduzieren. Die oben genannte Tatsache gestattet zugleich die Möglichkeit des Gleitens der Verkleidungselemente auf den Fäden, was, wie bereits behauptet worden ist, ein wesentlicher Aspekt ist, um eine Gestaltungsmöglichkeit nach Belieben zu gewährleisten und es ist darüber hinaus eine größere Bewegungfreiheit für die zwei Fäden im Inneren des Tunnels vorhanden, der von der Reihenfolge der verschiedenen durchgehenden Öffnungen der verschiedenen aufgereihten Verkleidungselementen gebildet wird. Auf dieser Weise werden nämlich die kleinen gegenseitigen Annäherungs- und Entfernungsbewegungen der Verkleidungselementen nicht verhindert oder beschränkt, wobei diese Bewegungen notwendig sind, damit das Schmuckstück jeweils verschiedene Formen annehmen kann. Es ist daher möglich das superelastische Verhalten der metallischen Formgedächtnislegierung (Shape Memory Alloy) völlig und unbeschränkt zu nutzen, was der Tatsache entspricht jede beliebige Bewegung des Schmuckstücks zu ermöglichen. Bezug nehmend zum Beispiel auf eine ursprüngliche vorbestimmte schraubenförmige Form, kann man zum Beispiel das Schmuckstück an den Enden ziehen um es auszustrecken oder man kann nur einen Teil davon ausstrecken und der übrige Teil kann schraubenförmig bleiben. Das erfindungsgemäße Schmuckstück kann auch nach Belieben gemäß einer Schraube gewickelt werden, die wegen der Anzahl oder der Größe oder der Steigung der Windungen jeweils verschieden ist, zum Beispiel um das Schmuckstück vom Handgelenk zum Unterarm oder gar zum Arm und umgekehrt verlegen zu können oder um es auf jeden Finger der Händen anbringen zu können. Das erfindungsgemäße Schmuckstück kann auch vorübergehend derart gestaltet werden, dass eine oder mehrere Windungen sich in einer Ebene befinden die zur Hauptachse der Schraube parallel ist, zum Beispiel um Verzierungseigenschaften besser zu zeigen, die auf der ersten oder auf der letzten Windung aufgebracht sind.

Bezug nehmend zum Beispiel auf eine ursprüngliche vorbestimmte ringförmige Form kann man zum Beispiel zwei Verkleidungselemente miteinander verbinden und eine achtförmige Form erhalten und dann das Handgelenk durch die beiden erzeugten Kreisen hindurch stecken. Man kann auch die Verkleidungselemente des ursprünglichen vorbestimmten Ringes jeweils zu zweit verbinden und eine Reihe von kleineren Ringe bilden und somit ein Armband mit ringförmigen Maschen erhalten, das um das Handgelenk herum gewickelt und befestigt werden kann. Ausgehend von anderen ursprünglichen vorbestimmten Formen sind offensichtlich andere Formen möglich.

Dank der bedingungslosen Gestaltungsmöglichkeit die durch die Erfindung erzeugt wird, ist die Anzahl der Möglichkeiten die einer Person zur Verfügung stehen um die Form des erfindungsgemäßen Schmuckstückes zu verändern unzählig.

Vorausgesetzt dass mit allen metallischen Formgedächtnislegierungen (Shape Memory Alloys) die der Erfindung zugrunde liegende Aufgabe gelöst wird, bevorzugt man gemäß Anspruch 2 eine metallische Formgedächtnislegierung anhand von Nickel und Titan, die bearbeitet wird um Fäden zu bilden die einen Durchmesser haben der, wie in Anspruch 3 beansprucht worden ist, vorzugsweise, falls das Schmuckstück ein Fingerring ist, zwischen 0,40 mm und 0,55 mm liegt oder, falls das Schmuckstück ein Armband sein sollte, vorzugsweise zwischen 0,75 mm und 0,85 mm liegt, wie in Anspruch 4 beansprucht worden ist. Diese Werte des Durchmessers der Fäden die die metallische Tragstruktur bilden, bezeichnen Toleranzgrenzen innerhalb welchen eine optimale metallische Tragstruktur erreicht wird, wobei damit eine metallische Tragstruktur gemeint wird, die widerstandsfähig ist und zugleich die kleinsten möglichen Abmessungen aufweist.

Dank dem Merkmal des Anspruches 5, können die verschiedenen Verkleidungselemente formschlussig das eine an dem anderen verbunden werden, aber derart dass eine freie gegenseitige Gelenkmöglichkeit erlaubt ist. Dies erhöht noch mehr die Sicherheit gegen eine unerwünschte Drehung eines Verkleidungselements gegenüber einem anderen um die zwei Fäden herum.

Dank dem Merkmal das in Anspruch 6 beansprucht wird, gemäß welchem ein oder mehrere oder alle Verkleidungselemente zumindest einen Sitz aufweisen, der dazu bestimmt ist stationär ein Verzierungselement aufzunehmen, ist es möglich, sowohl um das Schmuckstück zu verzieren als auch um es wertvoller zu machen, zusätzlich Verzierungelemente, wie zum Beispiel Edelsteine, anzuordnen.

In dem Anspruch 7 wird eine Ausführungsform des Sitzes beansprucht, die, obwohl sie einfach ist, dennoch zuverlässig ist und es erlaubt die Verzierungselemente sicher zu halten, die wie gesagt auch wertvoll sein können.

Gemäß Anspruch 8 weisen die Sitze von zwei verschiedenen Verkleidungselementen Form und Abmessungen auf, die, abhängig von den physischen Eigenschaften des Verzierungselements das sie aufnehmen, einander verschieden sind. Dank diesem Merkmal kann das Schmuckstück Verzierungselemente aufweisen die einander verschieden sind.

Darüberhinasu ist es auch möglich, dass, wie in dem Anspruch 9 beansprucht wurde, zumindest zwei der auf demselben Verkleidungselement vorgesehenen Sitzen wegen Form und Abmessungen einander verschieden sind. Dieses Merkmal ermöglicht es die Verzierung des Schmuckstückes noch mehr zu variiren.

Dank dem Merkmal das in dem Anspruch 10 beansprucht wird, gemäß welchem ein Stützelement vorgesehen ist, das die Spitzen des zumindest einen Sitzes miteinander verbindet, ist es möglich auf einem Verkleidungselement ein Verzierungselement aufzunehmen das größere Abmessungen aufweist als jene der anderen Verzierungselementen des Schmuckstückes.

Das Merkmal des Anspruches 11, gemäß welchem die Enden des einen Fadens miteinander verbunden, insbesondere miteinander verschweisst sind, und die Enden des anderen Fadens miteinander verbunden, insbesondere miteinander verschweisst sind, ermöglicht es auch ursprüngliche vorbestimmte Formen zu erzeugen die in sich geschlossen sind, wie zum Beispiel eine ringförmige Form.

Das Merkmal gemäß Anspruch 12, gemäß welchem zwei Endelemente vorgesehen sind, ermöglicht es auch die Enden des Schmuckstückes zu verzieren.

Bezüglich insbesondere jener Endelemente, die den Verkleidungselementen zuzuordnen sind die zumindest ein Verzierungselement tragen, d.h. die zumindest einen Sitz aufweisen, ist es zweckmäßig, dass das Endelement, wie in Anspruch 13 beansprucht wurde, sowohl zumindest einen Sitz als auch zumindest einen weiteren Sitz aufweist, wobei die Hauptebene des zumindest einen weiteren Sitzes gegenüber der Hauptebene des zumindest einen Sitzes geneigt angeordnet ist. Dies ermöglicht es die Enden des Schmuckstückes mit einem Verzierungselement zu verzieren.

Die Formen die das erfindungsgemäße Schmuckstück annehmen kann sind, wie oben erläutert wurde, vorubergehende Formen, weil das Schmuckstück, sobald die Kräfte die das Schmuckstück in einer Form halten die anders als die ursprüngliche vorbestimmte Form ist verschwinden, elastisch zu seiner ursprünglichen vorbestimmten Form zurückkehrt. Diese Kräfte werden üblicherweise von den Körperteilen der Person die das Schmuckstück tragen, wie die Handgelenke, die Arme oder die Fingern ausgeübt. Dank dem Merkmal gemäß Anspruch 14, gemaß welchem zumindest zwei Verkleidungselemente gegenseitige Verbindungsmittel aufweisen, ist es möglich, indem besagte gegenseitige Verbindungsmittel von zwei Verkleidungselemente verbunden werden, weitere Formen zu erhalten, die sonst, wenn das Schmuckstück nur von den Körperteilen der Person die das Schmuckstück trägt beaufschlagt wäre, nicht möglich wären.

### Kurze Beschreibung der Zeichnungen

Weitere vorteile und Merkmale der Erfindung werden klarer aus der folgenden Beschreibung von Ausführungsbeispielen der Erfindung hervorgehen, die rein beispielhaft und nicht in beschränkender Weise aufgrund der beigelegten Zeichnungen erläutert werden. In den Zeichnungen zeigen:
die Figuren **1 und 2** eine perspektivische Darstellung von jeweils zwei möglichen vorbestimmten ursprünglichen Formen des erfindungsgemäßen Schmuckstückes, wobei ein erstes Ausführungsbeispiel der Verkleidungselemente dargestellt ist,
die Figuren **3 und 4** eine perspektivische Darstellung der beiden Formen der Figuren 1 und 2, wobei aber ein zweites Ausführungsbeispiel der Verkleidungselemente dargestellt ist,
die Figuren **5 und 6** eine perspektivische Darstellung jeweils von oben und von unten eines Verkleidungselements der Figuren 1 und 2 das auf der erfindungsgemäßen metallischen Tragstruktur angebracht ist,
die Figuren **7, 8, 9 und 10** jeweils eine perspektivische Darstellung, eine Draufsicht, eine Vorderansicht und eine Rückansicht eines Verkleidungselements der Figuren 1 und 2,
die Figuren **11 und 12** eine perspektivische Darstellung jeweils von oben und von unten eines Verkleidungselements der Figuren 3 und 4 das auf der erfindungsgemäßen metallischen Tragstruktur angebracht ist,
die Figuren **13, 14, 15 und 16** jeweils eine perspektivische Darstellung, eine Draufsicht, eine Vorderansicht und eine Rückansicht eines Verkleidungselements der Figuren 3 und 4,
die Figur **17** eine perspektivische Darstellung eines Teiles des Schmuckstückes der Figuren 3 und 4 während seiner Herstellung,
die Figur **18** eine Vorderansicht des Verkleidungselements der Figuren 13-16, das aber Verzierungselemente trägt,
die Figuren **19 und 20** jeweils eine Vorderansicht eines dritten Ausführungsbeispiels und eines vierten Ausführungsbeispiels eines Verkleidungselements,

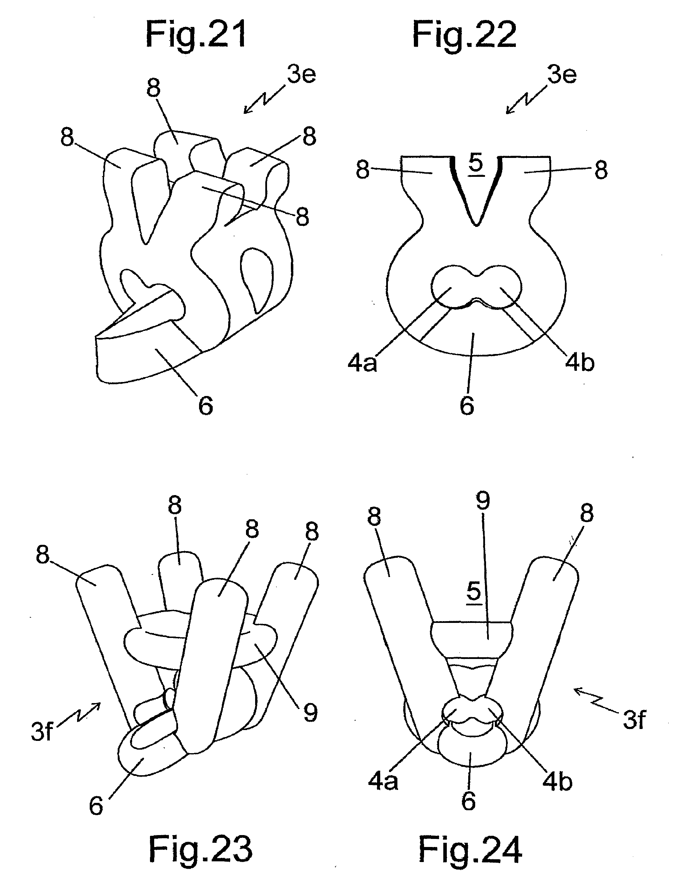

die Figuren **21 und 22** jeweils eine perspektivische Darstellung und eine Vorderansicht eines fünften Ausführungsbeispiels eines Verkleidungselements,
die Figuren **23 und 24** jeweils eine perspektivische Darstellung und eine Vorderansicht eines sechsten Ausführungsbeispiels eines Verkleidungselements,

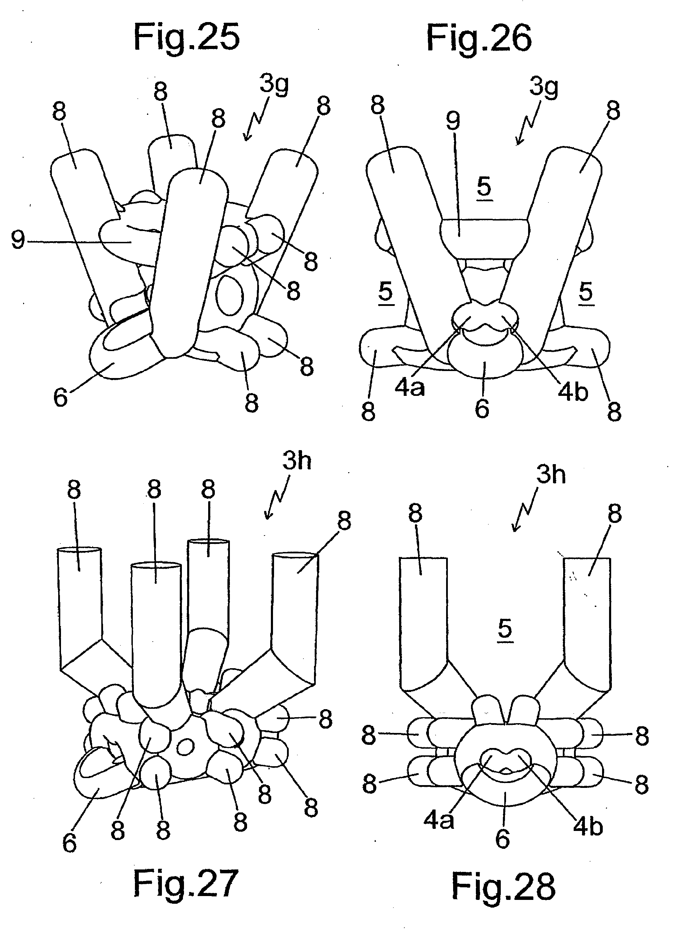

die Figuren **25 und 26** jeweils eine perspektivische Darstellung und eine Vorderansicht eines siebten Ausführungsbeispiels eines Verkleidungselements,
die Figuren **27 und 28** jeweils eine perspektivische Darstellung und eine Vorderansicht eines achten Ausführungsbeispiels eines Verkleidungselements,
die Figuren **29 und 30** jeweils eine Vorderansicht und eine Rückansicht eines ersten Ausführungsbeispiels eines Endelements des erfindungsgemäßen Schmuckstückes,
die Figuren **31 und 32** jeweils eine Vorderansicht und eine Rückansicht eines zweiten Ausführungsbeispiels eines Endelements des erfindungsgemäßen Schmuckstückes,
die Figur **33** eine perspektivische Darstellung von einer möglichen Form die das Schmuckstück der Figuren 1 und 3 annehmen kann,
die Figur **34** eine perspektivische Darstellung von einer möglichen Form die das Schmuckstück der Figuren 2 und 4 annehmen kann,
die Figur **35** eine perspektivische Darstellung von einer weiteren möglichen vorbestimmten ursprünglichen Form des erfindungsgemäßen Schmuckstücks,
die Figuren **36 und 37** jeweils eine perspektivische Darstellung von zwei möglichen Formen die das Schmuckstück der Figur 35 annehmen kann.

### Bester Weg um die Erfindung zu verwirklichen

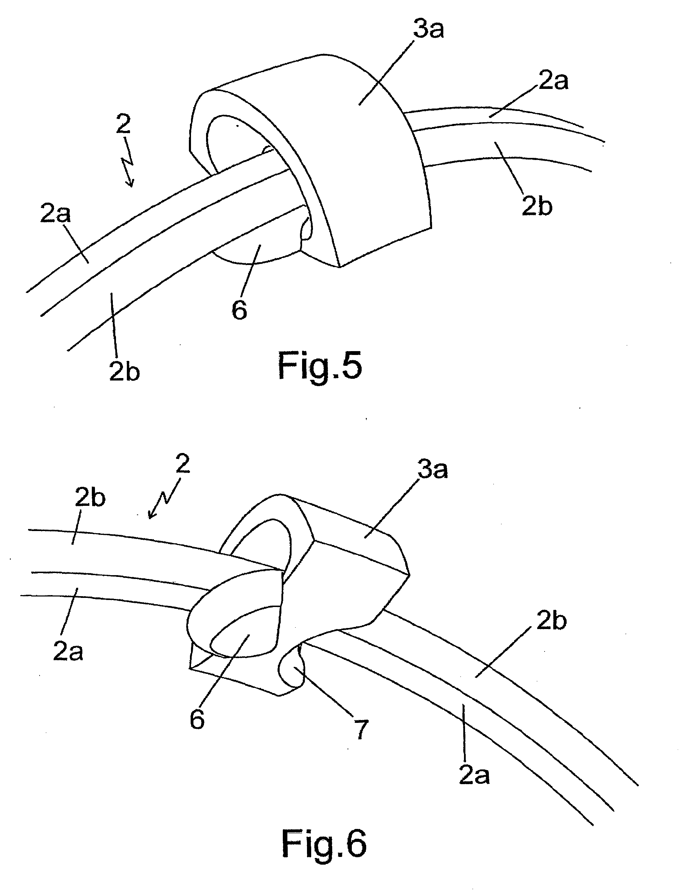

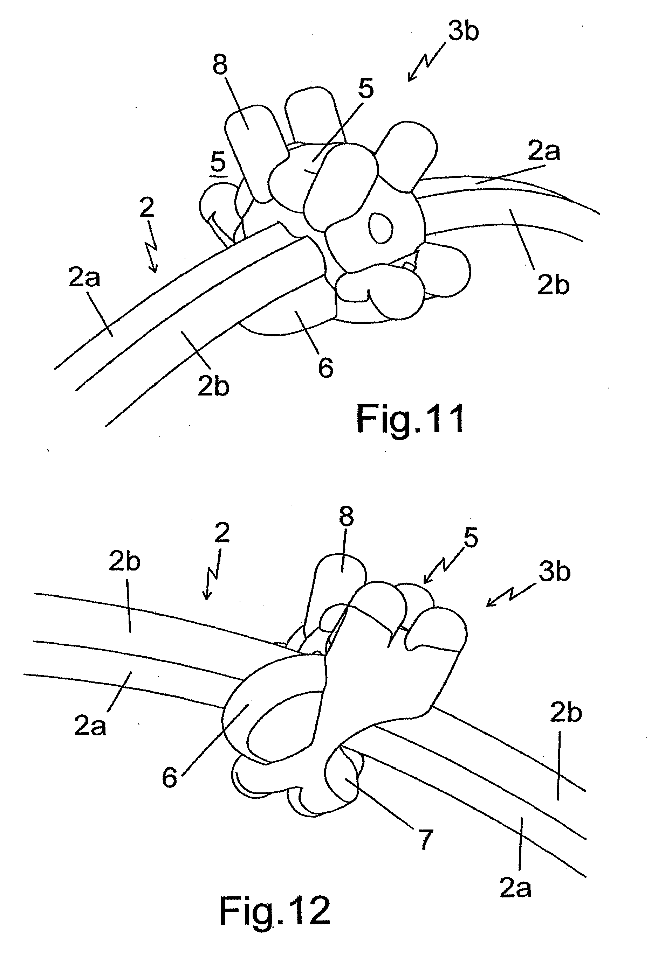

Wie oben behauptet wurde, umfasst das Schmuckstück 1 eine metallische Tragstruktur 2 und eine Mehrzahl von Verkleidungselementen. In den verschiedenen Figuren wurden insgesamt acht Ausführunsbeispiele 3a;3b;3c;3d;3e;3f;3g;3h für die Verkleidungselemente dargestellt, aber alle diese Ausführungsbeispiele für die Verkleidungselemente besitzen gemeinsam das Merkmal, dass die Verkleidungselemente reihenweise das eine nach dem anderen auf der metallischen Tragstruktur 2 angeordnet sind und dass jedes von ihnen eine durchgehende Öffnung aufweist, durch welche die metallische Tragstruktur 2 sich hindurch erstreckt. Auf dieser Weise, wie zum Beispiel aus den Figuren 5 und 6 bezüglich des Verkleidungselements 3a oder zum Beispiel aus den Figuren 11 und 12 bezüglich des Verkleidungselements 3b hervorgeht, kann jedes Verkleidungselement 3a;3b;3c;3d;3e;3f;3g;3h auf der metallischen Tragstruktur 2 aufgefädelt sein.

Die metallische Tragstruktur 2 besteht aus einem Paar Fäden 2a,2b, die aus einer sogenannten metallischen Formgedächtnislegierung (Shape Memory Alloy) hergestellt sind, vorzugsweise eine metallische Legierung anhand von Nickel und Titan. Die Fäden 2a,2b sind einer neben dem anderen angeordnet und sind nur im Bereich deren Enden miteinander verbunden, insbesondere verschweisst.

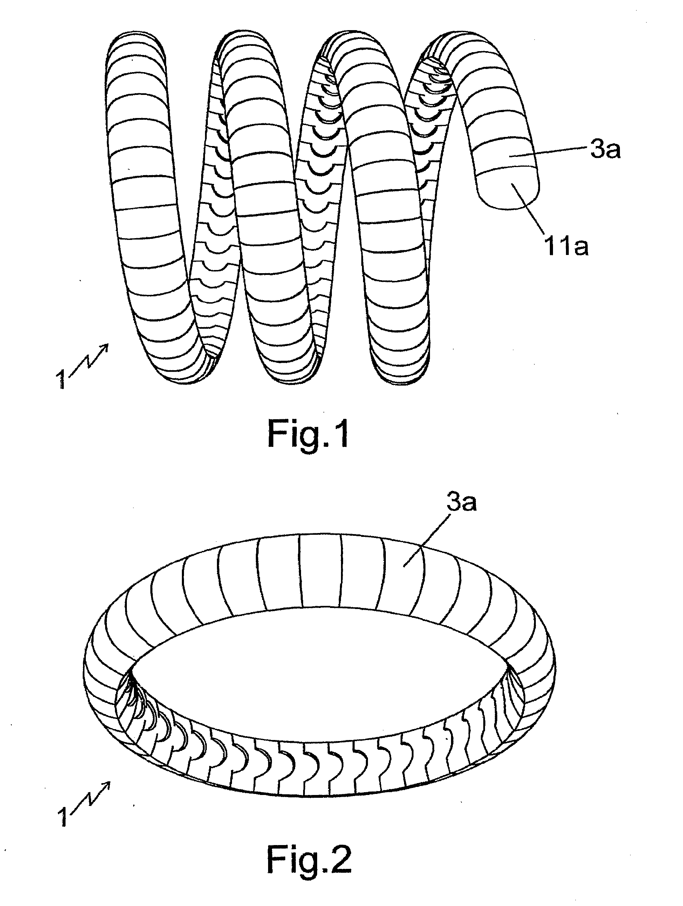

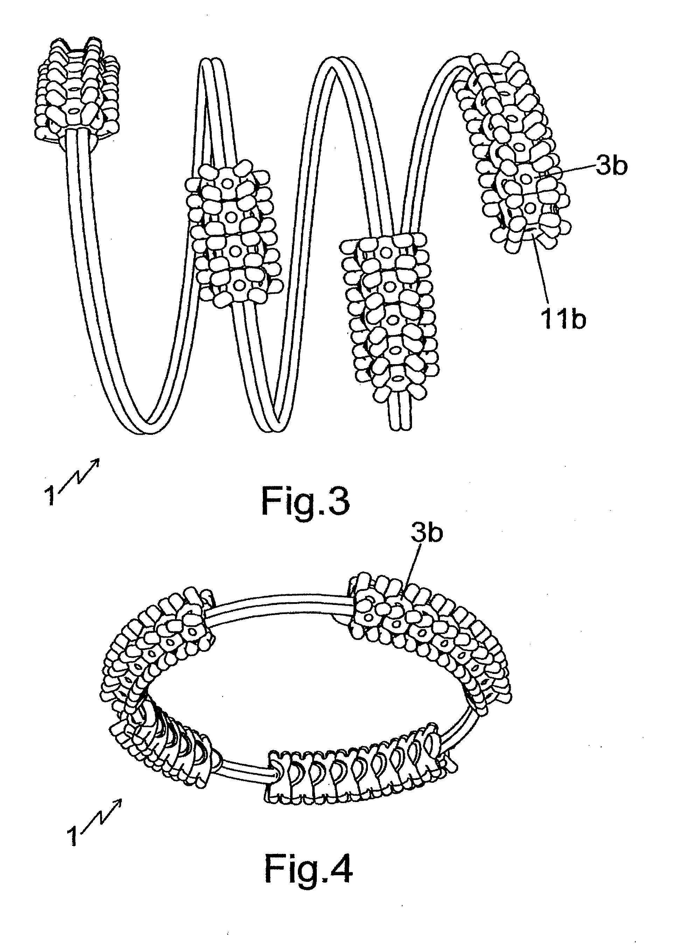

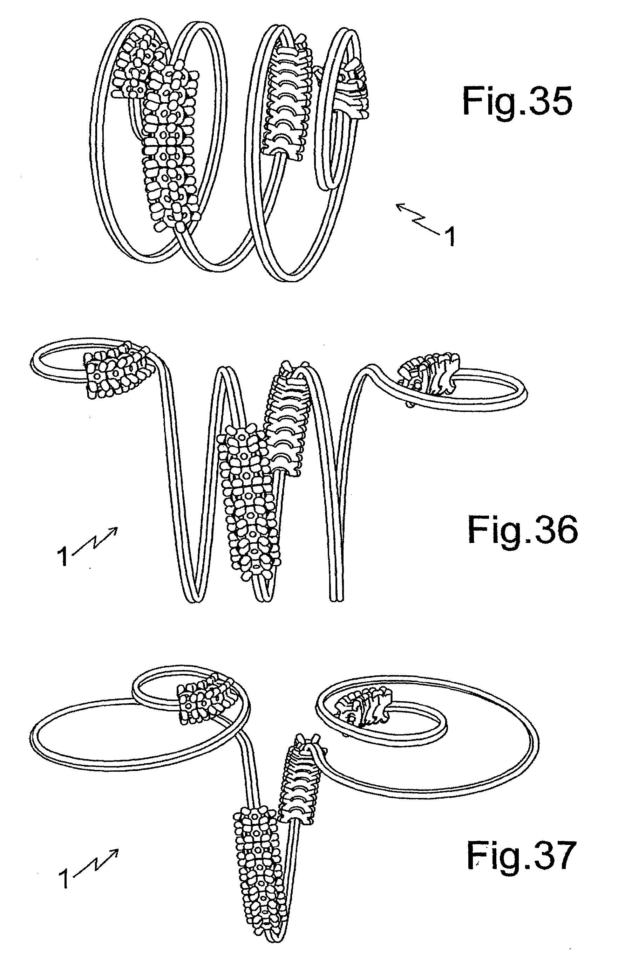

Eine solche Formgedächtnislegierung (Shape Memory Alloy) besitzt bekanntlich ein superelastisches Verhalten, d.h. sie ist in der Lage elastische Verformungen von größter Größe zu erleiden und dann wieder zu ihrer ursprünglichen vorbestimmten Form zurückzukehren. Diese ursprüngliche vorbestimmte Form wird dem Paar Fäden 2a,2b vom Hersteller bei der Herstellung des Schmuckstückes 1 gegeben und sie wird aufgrund von Überlegungen ausgewählt, die in Verbindung mit der darauffolgenden Benutzung des Schmuckstückes und mit seinen Verzierungseigenschaften stehen. In den Figuren wurden einige möglichen ursprünglichen Formen dargestellt die vorbestimmt werden können, und zwar eine schraubenförmige Form in den Figuren 1 und 3, eine ringförmige Form in den Figuren 2 und 4 und eine weitere schraubenförmige Form in der Figur 35, aber diese letzte schraubenförmige Form ist anders als die der Figuren 1 und 3. In diesen Figuren wurden beispielhaft die Verkleidungselemente 3a oder 3b dargestellt. Es sind natürlich alle ursprünglichen vorbestimmten Formen möglich, die in der Lage sind die beiden Fäden 2a, 2b anzunehmen.

Falls die metallische Tragstruktur 2 dazu dienen soll Fingerringe zu fertigen, die an den Fingern gesteckt werden, liegt der Durchmesser der Fäden 2a,2b vorzugsweise zwischen 0,40 mm und 0,55 mm. Falls die metallische Tragstruktur 2 dazu dienen soll Armbänder oder Halsketten zu fertigen, liegt der Durchmesser der Fäden 2a,2b vorzugsweise zwischen 0,75 mm und 0,85 mm.

Die durchgehende Öffnung jedes Verkleidungselements 3a;3b;3c;3d;3e;3f;3g;3h besteht aus einem Paar von nebeneinanderliegenden Löcher 4a,4b, die einen für den Durchgang der beiden Fäden 2a,2b geeigneten Querschnitt aufweisen. Sowohl das erste Verkleidungselement als auch das letzte Verkleidungselement der angereihten Verkleidungselemente 3a;3b;3c;3d;3e;3f;3g;3h ist zusätzlich mit den Fäden 2a,2b verbunden, insbesondere verschweisst, während die übrigen Verkleidungselemente der angereihten Verkleidungselementen 3a;3b;3c;3d;3e;3f;3g;3h nur frei auf dem Paar Fäden 2a,2b aufgefädelt sind und längs ihnen gleiten können.

Die beiden nebeneinander liegenden Löcher 4a,4b stehen, wie in den Figuren dargestellt wurde, erfindungsgemäß auf der inneren Seite miteinander in Verbindung und weisen keine interne Seitentrennwand auf.

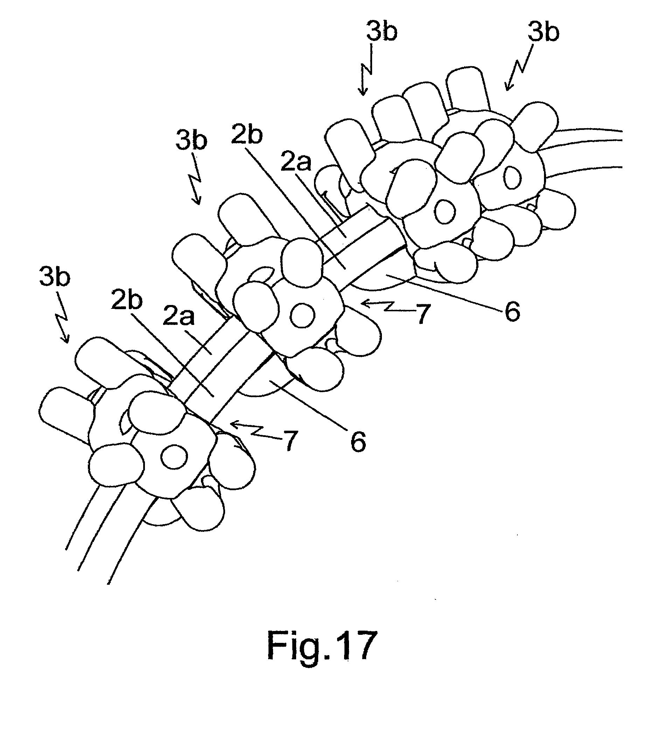

Jedes Verkleidungselement 3a;3b;3c;3d;3e;3f;3g;3h kann zweckmäßigerweise zusätzlich einen Vorsprung 6 und eine Ausnehmung 7 aufweisen. Sie 6,7 erstrecken sich längs einer Richtung die zu der Längserstreckungsrichtung des Paares von nebeneinanderliegenden Löcher 4a,4b parallel ist und sie dienen dazu die Verkleidungselemente 3a;3b;3c;3d;3e;3f;3g;3h das eine an dem anderen zu verbinden. Um diese Art von Verbindung zu verstehen, kann man bezug auf figur 17 nehmen, in dem ein Teil des Schmuckstückes 1 der Figuren 3 und 4 während seiner Herstellung dargestellt ist. In dieser Figur sind beispielhaft einige Verkleidungselemente 3b dargestellt, aber was für sie erläutert wird gilt für alle Ausführungsbeispiele 3a;3b;3c;3d;3e;3f;3g;3h der Verkleidungselemente. Die Verbindung wird dadurch hergestellt, dass der Vorsprung 6 eines allgemeinen Verkleidungselements 3a;3b;3c;3d;3e;3f;3g;3h, im Fall der Figur 17 zum Beispiel eines Verkleidungselements 3b, geeignet ist in die Ausnehmung 7, von einem der beiden Verkleidungselementen die in der Reihe diesem besagten allgemeinen Verkleidungselement 3a;3b;3c;3d;3e;3f;3g;3h benachbart sind, hineingesteckt zu werden und dass die Ausnehmung 7 dieses besagten allgemeinen Verkleidungselements 3a;3b;3c;3d;3e;3f;3g;3h geeignet ist den Vorsprung 6, des anderen der beiden Verkleidungselementen die in der Reihe diesem besagten allgemeinen Verkleidungselement 3a;3b;3c;3d;3e;3f;3g;3h benachbart sind, aufzunehmen. Der Vorsprung 6 und die Ausnehmung 7 sind zweckmäßigerweise vorgesehen, aber sie können auch nicht vorhanden sein, da hauptsächlich das Vorsehen der zwei Fäden 2a,2b und der zwei Löcher 4a,4b eine Drehung des Verkleidungselements 3a;3b;3c;3d;3e;3f;3g;3h um die metallische Tragstruktur 2 herum verhindert.

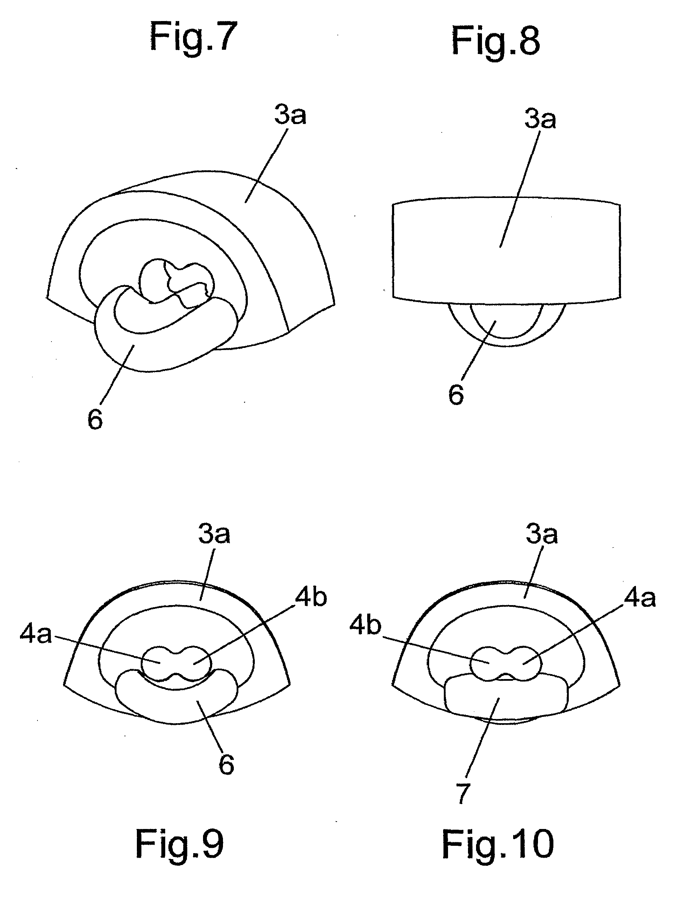

Wie oben behauptet wurde, wurden acht verschiedene Ausführungsbeispiele der Verkleidungselemente dargestellt. Ein erstes Ausführungsbeispiel ist insbesondere in den Figuren 7-10 dargestellt. Um seine Verzierungsfunktion ausüben zu können und um dem Schmuckstück das gewünschte Aussehen verleihen zu können, weist dieses Verkleidungselement Gestalten, Umrisse, Farben, Zeichnungen und Oberflächenbeschaffenheit die für diesen Zweck geeignet sind, aber diese äußerlichen Eigenschaften der Oberfläche wurden nicht dargestellt.

Etwas allgemeiner aber, wie es der Fall für alle andere sieben Ausführungsbeispiele 3b;3c;3d;3e;3f;3g;3h der Verkleidungselemente ist, weisen ein oder mehrere oder alle Verkleidungselemente 3b;3c;3d;3e;3f;3g;3h zumindest einen Sitz 5 auf, der dazu bestimmt ist stationär ein Verzierungselement 14 aufzunehmen. Dies erhöht die Verzierungsmöglichkeiten des Verkleidungselements und daher des Schmuckstückes 1. Jeder Sitz 5 ist bodenseitig von der Oberfläche des jeweiligen Verkleidungselement 3b;3c;3d;3e;3f;3g;3h und seitlich von einer Mehrzahl von Spitzen 8, zumindest drei und insbesondere vier Spitzen 8, abgegrenzt, die aus der Oberfläche des jeweiligen Verkleidungselement 3b;3c;3d;3e;3f;3g;3h herausragen und gleichmäßig längs des Umfangs des Sitzes 5 verteilt sind.

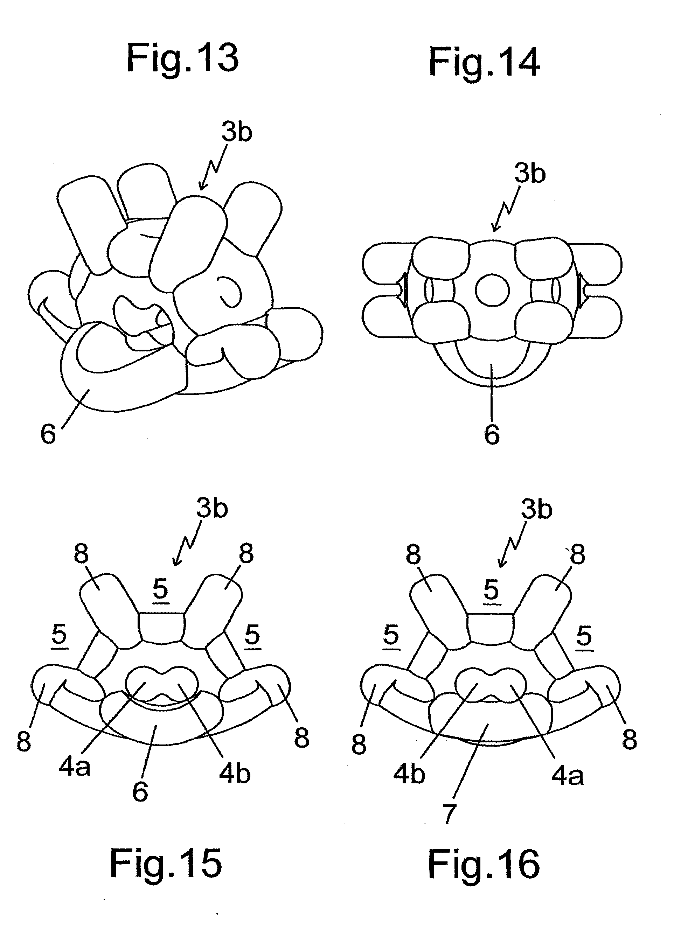

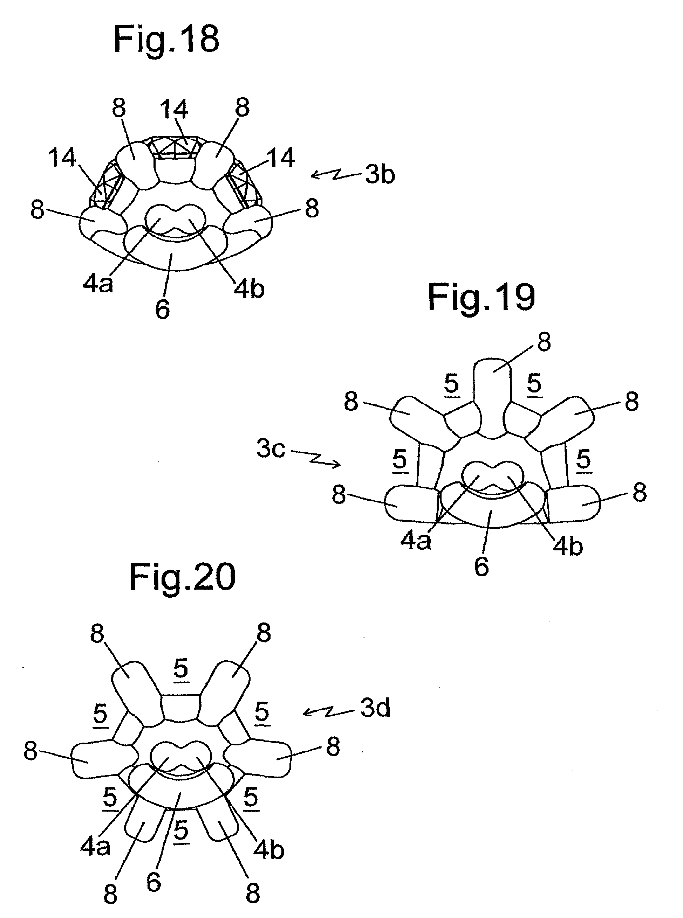

Die Anzahl der Sitze 5, die auf jedem Verkleidungselement 3b;3c;3d;3e;3f;3g;3h vorgesehen sind, hängt von der Art der Verzierung ab, die man durch die Verzierungselemente 14 erreichen möchte die in den verschieden Sitzen 5 anzuordnen sind. In den Figuren 1-16 und 18 ist ein zweites Ausführungsbeispiel 3b und in der Figur 19 ist ein drittes Ausführungsbeispiel 3c eines Verkleidungselements dargestellt. Besagtes zweites Ausführungsbeispiel 3b weist drei Sitze 5 auf für entsprechende drei Verzierungselemente 14, hingegen besagtes drittes Ausführungsbeispiel 3c weist vier Sitze 5 auf. Die Sitze 5 sind längs eines Teiles des Umfangs des Verkleidungselement 3b oder 3c verteilt.

In den Figuren hat man im Allgemeinen verzichtet diese Verzierungselemente 14 des Schmuckstückes 1 darzustellen, weil sie für die technische Aspekte, die die freie Möglichkeit die Form das Schmuckstückes 1 zu verändern betreffen, nicht relevant sind und weil sie darüberhinaus die darunterliegenden Verkleidungselemente 3b;3c;3d;3e;3f;3g;3h und die aus den zwei Fäden 2a,2b bestehende metallische Tragstruktur 2 verdecken. In der Figur 18 wurde aber beispielhaft ein solches Verkleidungselement 3b dargestellt, das drei als Edelsteine ausgebildete Verzierungselemente 14 trägt.

In der weiteren Figur 20 ist ein viertes Ausführungsbeispiel 3d dargestellt, das simmetrisch ist und Sitze 5 aufweist die längs seines gesamten Umfangs verteilt sind.

Die Figurenpaare 21-22 und 23-24 betreffen ein fünftes 3e und ein sechtes 3f Ausführunsbeispiel für das Verkleidungselement. In diesen Fällen weist das Verkleidungselement 3e, 3f einen einzigen Sitz 5, aber es handelt sich um einen Sitz 5 der Form und Abmessungen aufweist, die gegenüber jene die von den Verkleidungselementen 3b;3c;3d aufgewiesen werden anders sind. Diese Verkleidungselemente 3e,3f werden benutzt, um besondere und spezifische Verzierungselemente 14 aufzunehmen, zum Beispiel Edelsteine die in besonderer Weise geschnitten werden. Im Fall des Verkleidungselement 3f ist zusätzlich ein Stützelement 9 vorgesehen, das die Spitzen 8 miteinander verbindet und dazu dient die seitliche Abgrenzung des Sitzes 5 zu verbessern.

Die Figurenpaare 25-26 und 27-28 betreffen jeweils ein siebtes 3g und ein achtes 3h Ausführunsbeispiel für das Verkleidungselement. Die Sitze 5 die im Allgemeinen ein allgemeines Verkleidungselement 3b;3c;3d;3e;3f;3g;3h aufweisen, müssen nicht unbedingt alle gleich sein. Diese Verkleidungselemente 3g,3h weisen zum Beispiel, neben zumindest einen Sitz 5 der Art von denen der Verkleidungselementen 3b, auch einen Sitz 5 der wegen der Abmessungen und/oder der Form anders ist, sodass es möglich ist auf einem gleichen Verkleidungselement 3g,3h zugleich Verzierungselemente 14 aufzunehmen, die einander nicht alle gleich sind.

Das erfindungsgemäße Schmuckstück 1 umfasst ferner zwei Endelemente 11a;11b;11c;11d;11e;11f;11g;11h, die jeweils an den beiden Enden des Schmuckstückes 1 angebracht werden.

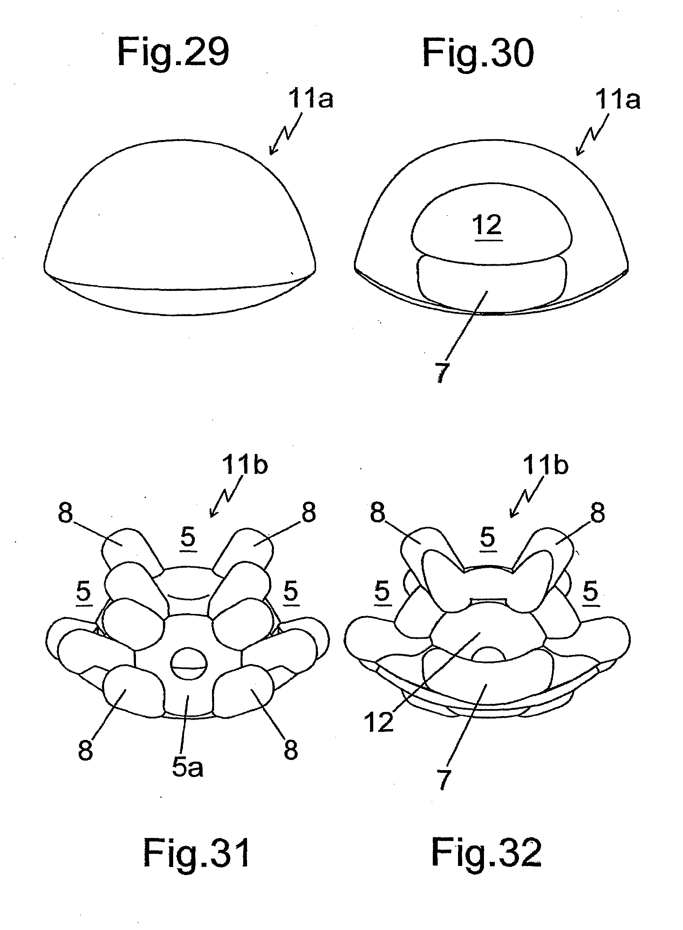

In den Figuren 29-30 und 31-32 sind beispielhaft ein erstes 11a und ein zweites Ausführungsbeispiel 11b von solchen Endelementen dargestellt. Etwas genauer ist das Endelement 11a vorzugsweise insbesondere dem Verkleidungelement 3a zuzuordnen, für welches keine Sitze 5 vorgesehen sind, hingegen ist das Endelement 11b vorzugsweise insbesondere dem Verkleidungselement 3b zuzuordnen, für welches die Sitze 5 für die Verzierungselemente 14 vorgesehen sind.

Das was hinsichtlich dieses Endelement 11b erläutert wird, gilt aber im Allgemeinen für alle entsprechenden Endelemente 11c;11d;11e;11f;11g;11h die erfindungsgemäß vorgesehen aber in den Figuren nicht dargestellt sind und die sich vom Endelement 11b lediglich wegen der Anzahl oder der Abmessungen oder der Form der Sitze 5, die auf ihnen vorhanden sind, unterscheiden. Die Endelemente 11c;11d;11e;11f;11g;11h sind vorzugsweise den jeweiligen Verkleidungselementen 3c;3d;3e;3f;3g;3h zuzuordnen. Jedem Paar von Endelementen 11a;11b;11c;11d;11e;11f;11g;11h ist das Merkmal gemeinsam, dass sie jeweils eines mit dem ersten und das andere mit dem letzten Verkleidungselement der aufgereihten Verkleidungselementen 3a;3b;3c;3d;3e;3f;3g;3h verbunden, insbesondere verschweisst sind und dass sie im Inneren eines eigenen Hohlraumes 12 ein Ende der beiden Fäden 2a,2b aufnehmen. Jedes Endelement 11a;11b;11c;11d;11e;11f;11g;11h weist sowohl zumindest einen Sitz 5 als auch zumindest einen weiteren Sitz 5a auf, wobei die Hauptebene des zumindest einen weiteren Sitzes 5a gegenüber der Hauptebene des zumindest einen Sitzes 5 geneigt angeordnet ist. Dies ermöglicht es das gesamte Ende des Schmuckstückes 1 zu verzieren.

Das erfindungsgemäße Schmuckstück 1 kann, wie behauptet wurde, irgendeine ursprüngliche vorbestimmte Form aufweisen. Diese ursprüngliche vorbestimmte Form wird dem Paar Fäden 2a,2b bei der Herstellung des Schmuckstückes 1 gegeben. In den Figuren 1 und 3 ist zum Beispiel eine ursprüngliche schraubenförmige Form dargestellt, hingegen in den Figuren 2 und 4 ist eine ursprüngliche ringförmige Form dargestellt. Diese ursprüngliche vorbestimmte ringförmige Form kann, zusätzlich zu dem was bereits behauptet wurde, dadurch erreicht werden dass die Enden des Fadens 2a miteinander verbunden, insbesondere miteinander verschweisst und die Enden des Fadens 2b miteinander verbunden, insbesondere miteinander verschweisst werden.

Die angereihten Verkleidungselemente 3a;3b;3c;3d;3e;3f;3g;3h, die auf dem Paar Fäden 2a,2b aufgefädelt sind, stellen sich gemaß der Form auf, die die darunterliegenden Fäden 2a,2b annehmen und sie behindern in keiner Weise die etwaigen Bewegungen der Fäden 2a,2b. Diese Fäden 2a,2b sind aus einer metallischen Formgedächtnislegierung (Shape Memory Alloy) hergestellt, sodass ausgehend von der ursprünglichen vorbestimmten Form das Schmuckstück 1 frei gestalbar ist und jede mögliche Form annehmen kann die anders als die ursprüngliche vorbestimmte Form ist, aber sobald die Kräfte die es in der neuen Form gebracht haben verschwinden, neigt es sofort dazu besagte ursprüngliche vorbestimmte Form wieder anzunehmen. Um die Zeichnung nicht zu kompliziert zu machen und um die darunterliegende aus den zwei Fäden 2a,2b bestehende metallische Tragstruktur 2 zu zeigen, wurde nicht die gesamte Reihe von Verkleidungselementen dargestellt.

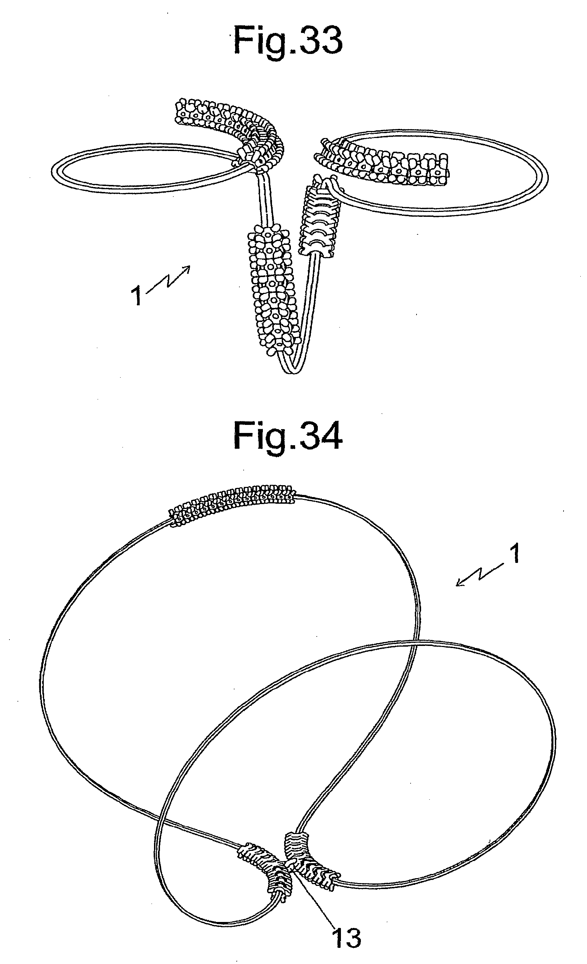

In den Figuren 33 und 34 sind beispielhaft zwei mögliche Formen dargestellt, die vorübergehend und in reversibler Weise mit dem erfindugsgemäßen Schmuckstück 1 erreichbar sind.

In der Figur 33 ist eine Form dargestellt, die ausgehend zum Beispiel von der ursprünglichen vorbestimmten Form, die in Figur 3 ersichtlich ist, erreichbar ist. Um die Form der Figur 33 zu erreichen, muß die Person, die es wünscht das Schmuckstück 1 zu benutzen, lediglich die erste und die letzte Windung nach oben schwenken und dann einen Finger der Hand durch die übrige Windung hindurch stecken, sodass die erste und/oder die letzte Windung auf den darunterliegenden (nicht dargestellten) Finger aufliegt/aufliegen. Auf dieser Weise wurde ein Fingerring erzeugt. Die Anzahl der in der Figur dargestellten Windungen ist beispielhaft, d.h. die Windungen können auch mehr als drei sein, denn wichtig ist dass man die erste und/oder die letzte Windung nach oben schwenken kann. Das Gleiche gilt für die ursprüngliche vorbestimmte Form die in Figur 1 dargestellt ist, weil die Art des Verkleidungselements keinen Einfluß auf die Gestaltungsmöglichkeit des Schmuckstückes 1 hat. Man macht nämlich darauf aufmerksam, dass wenn man in der vorliegenden Beschreibung auf die angereihten Verkleidungselementen 3a;3b;3c;3d;3e;3f;3g;3h bezug genommen hat, nicht zwingend angereihte Verkleidungselemente zu verstehen waren die einander alle gleich waren. Es ist nämlich offensichtlich, dass in demselben Schmuckstück 1 auch mehrere Arten von Verkleidungselemente vorhanden sein können, die, je nachdem welche Art von Verzierung das Schmuckstück 1 erhalten soll, in Gruppen versammelt sind, die längs der zwei Fäden 2a,2b aufeinaderfolgend sind.

In der Figur 34 ist eine Form dargestellt, die ausgehend zum Beispiel von der ursprünglichen vorbestimmten Form, die in Figur 4 ersichtlich ist, erreichbar ist. Um die Form der Figur 34 zu erreichen, wird das erfindungsgemäße Merkmal genutzt, gemäß welchem zumindest zwei Verkleidungselemente 3a;3b;3c;3d;3e; 3f;3g;3h gegenseitige Verbindungsmittel 13 aufweisen. Durch das gegenseitige Verbinden von besagten Verbindungsmitteln 13, zum Beispiel ein Paar Haken, erhält die Person die das Schmuckstück benutzt zuerst eine achtförmige Form, also zwei Kreise, und dann durch das Hineinstecken der Hand durch diese zwei Kreise hindurch erreicht sie die Form der Figur 34. Auf dieser Weise wurde ein Armband erzeugt.

Wie bereits behauptet wurde, werden die möglichen ursprünglichen vorbestimmten Formen vom Hersteller ausgewählt.

In der Figur 35 ist zum Beispiel ein weiteres Ausführungsbeispiel für eine solche ursprüngliche vom Hersteller vorbestimmte Form dargestellt. Auch in diesem Fall wurde aus Zeichnungsgründen nicht die gesamte Reihe von Verkleidungselementen dargestellt. Die erste Windung und die letzte Windung sind kleiner als die übrigen Windungen die von den zwei Fäden 2a,2b gebildet werden, die aus einer metallischen Formgedächtnislegierung (Shape Memory Alloy) hergestellt sind. Man bemerke, dass eine solche Form auch von der Person selbst erreicht werden kann die das Schmuckstück 1 benutzt, zum Beispiel indem die kleineren Windungen durch die gegenseitige Verbindung von zwei Verkleidungselementen, die mit besagten Verbindungselemente 13 versehen sind, gebildet werden.

In den Figuren 36 und 37 sind dann zwei mögliche Formen dargestellt, die, ausgehend von der gleichen ursprünglichen vorbestimmten Form der Figur 35, die Person die das Schmuckstück benutzt dem Schmuckstück 1 geben kann. Zu diesem Zweck werden im Fall der Figur 36 die erste und die letzte Windung und im Fall der Figur 37 die ersten zwei und die letzten zwei Windungen nach oben geschwenkt. Man kann somit mit dem gleichen Schmuckstück 1 zwei verschiedene Fingerringe erhalten. Auch in diesen Figuren wurde aus Zeichnungsgründen nicht die gesamte Reihe von Verkleidungselementen dargestellt.

Jedes dieser Verkleidungselemente besitzt sehr kleine Abmessungen von einigen mm, in der Regel 2 oder 3 mm. Auf einem Paar Fäden 2a,2b können auch hunderte solcher Verkleidungselemente Platz finden.

## Patentansprüche

1. Schmuckstück (1) umfassend eine metallische Tragstruktur (2) und eine Mehrzahl von Verkleidungselementen (3a;3b;3c;3d;3e; 3f;3g;3h) die reihenweise das eine nach dem anderen auf der metallischen Tragstruktur (2) angeordnet sind, wobei jedes Verkleidungselement (3a;3b;3c;3d;3e;3f;3g;3h) eine durchgehende Öffnung aufweist durch welche die metallische Tragstruktur (2) sich hindurch erstreckt, sodass die Verkleidungselemente auf der metallischen Tragstruktur (2) aufgefädelt sind, wobei die metallische Tragstruktur (2) aus einem Paar Fäden (2a,2b) besteht, die aus einer sogenannten metallischen Formgedächtnislegierung (Shape Memory Alloy) hergestellt sind und einer neben dem anderen angeordnet sind und nur im Bereich deren Enden miteinander verbunden, insbesondere verschweisst, sind, wobei die durchgehende Öffnung jedes Verkleidungselements (3a;3b;3c;3d;3e;3f;3g;3h) aus einem Paar von nebeneinander liegenden Löcher (4a,4b) besteht und wobei sowohl das erste Verkleidungselement als auch das letzte Verkleidungselement der angereihten Verkleidungselemente (3a;3b;3c;3d;3e;3f;3g;3h) zusätzlich mit den Fäden (2a,2b) verbunden ist, insbesondere verschweisst ist, während die übrigen Verkleidungselemente der angereihten Verkleidungselementen (3a;3b;3c;3d;3e;3f;3g;3h) nur frei auf dem Paar Fäden (2a,2b) aufgefädelt sind und längs ihnen gleiten können, **dadurch gekennzeichnet dass** die beiden nebeneinanderliegende Löcher (4a,4b) auf der inneren Seite miteinander in Verbindung stehen und daher keine interne Seitentrennwand aufweisen.

2. Schmuckstück (1) nach Anspruch 1, **dadurch gekennzeichnet, dass** die metallische Formgedächtnislegierung (Shape Memory Alloy) eine metallische Legierung anhand von Nickel und Titan ist.

3. Schmuckstück (1) nach Anspruch 2, **dadurch gekennzeichnet, dass** der Durchmesser der Fäden (2a,2b) zwischen 0,40 mm und 0,55 mm liegt und dass das Schmuckstück (1) einen Fingerring ist.

4. Schmuckstück (1) nach Anspruch 2, **dadurch gekennzeichnet, dass** der Durchmesser der Fäden (2a,2b) zwischen 0,75 mm und 0,85 mm liegt und dass das Schmuckstück (1) ein Armband ist.

5. Schmuckstück (1) nach einem der Ansprüche von 2 bis 4, **dadurch gekennzeichnet, dass** jedes Verkleidungselement (3a;3b; 3c;3d;3e;3f;3g;3h) einen Vorsprung (6) und eine Ausnehmung (7) aufweist, die sich längs einer Richtung erstrecken die zu der Längserstreckungsrichtung des Paares von nebeneinanderliegenden Löcher (4a,4b) parallel ist, wobei der Vorsprung (6) eines allgemeinen Verkleidungselements (3a;3b;3c;3d;3e;3f;3g;3h) geeignet ist in die Ausnehmung (7) von einem der beiden Verkleidungselementen, die in der Reihe dem allgemeinen Verkleidungselement (3a;3b;3c;3d;3e;3f;3g;3h) benachbart sind, hineingesteckt zu werden und die Ausnehmung (7) des allgemeinen Verkleidungselements (3a;3b;3c;3d;3e;3f;3g;3h) geeignet ist den Vorsprung (6) des anderen der beiden Verkleidungselementen, die in der Reihe dem allgemeinen Verkleidungselement (3a;3b;3c;3d;3e;3f;3g;3h) benachbart sind, aufzunehmen.

6. Schmuckstück (1) nach einem der Ansprüche von 2 bis 5, **dadurch gekennzeichnet, dass** ein oder mehrere oder alle Verkleidungselemente (3b;3c;3d;3e;3f;3g;3h) zumindest einen Sitz (5) aufweisen, der dazu bestimmt ist stationär ein Verzierungselement (14) aufzunehmen.

7. Schmuckstück (1) nach Anspruch 6, **dadurch gekennzeichnet, dass** jeder Sitz (5) bodenseitig von der Oberfläche des jeweiligen Verkleidungselement (3b;3c;3d;3e;3f;3g;3h) und seitlich von einer Mehrzahl von Spitzen (8), zumindest drei und insbesondere vier Spitzen (8), abgegrenzt wird, die aus der Oberfläche des jeweiligen Verkleidungselement (3b;3c;3d;3e;3f;3g;3h) herausragen und gleichmäßig längs des Umfangs des Sitzes (5) verteilt sind.

8. Schmuckstück (1) nach Anspruch 7, **dadurch gekennzeichnet, dass** die Sitze (5) von zwei verschiedenen Verkleidungselementen (3b;3c;3d;3e;3f;3g;3h) Form und Abmessungen aufweisen, die, abhängig von den physischen Eigenschaften des Verzierungselements (14) das sie aufnehmen, einander verschieden sind.

9. Schmuckstück (1) nach Anspruch 8, **dadurch gekennzeichnet, dass** das auf einem gleichem Verkleidungselement (3g;3h) zwei Sitze (5) vorgesehen sind, die wegen der Form und der Abmessungen einander verschieden sind.

10. Schmuckstück (1) nach Anspruch 8 oder 7, **dadurch gekennzeichnet, dass** ein Stützelement (9) vorgesehen ist, das die Spitzen (8) des zumindest einen Sitzes (5) miteinander verbindet.

11. Schmuckstück (1) nach einem der Ansprüche von 2 bis 10, **dadurch gekennzeichnet, dass** die Enden des Fadens (2a) miteinander verbunden, insbesondere miteinander verschweisst sind, und dass die Enden des Fadens (2b) miteinander verbunden, insbesondere miteinander verschweisst sind.

12. Schmuckstück (1) nach einem der Ansprüche von 2 bis 11, **dadurch gekennzeichnet, dass** es zwei Endelemente (11a;11b;11c;11d;11e;11f;11g;11h) umfasst, die jeweils eines mit dem ersten und das andere mit dem letzten Verkleidungselement der aufgereihten Verkleidungselementen (3a;3b;3c;3d;3e;3f;3g;3h) verbunden, insbesondere verschweisst sind und im Inneren eines eigenen Hohlraumes (12) ein Ende der beiden Fäden (2a,2b) aufnehmen.

13. Schmuckstück (1) nach Anspruch 12, **dadurch gekennzeichnet, dass** jedes der beiden Endelemente (11a;11b;11c;11d;11e;11f;11g; 11h) sowohl zumindest einen Sitz (5) als auch zumindest einen weiteren Sitz (5a) aufweist, wobei die Hauptebene des zumindest einen weiteren Sitzes (5a) gegenüber der Hauptebene des zumindest einen Sitzes (5) geneigt angeordnet ist.

14. Schmuckstück (1) nach einem der Ansprüche von 2 bis 13, **dadurch gekennzeichnet, dass** zumindest zwei Verkleidungselemente (3a;3b;3c;3d;3e;3f;3g;3h) gegenseitige Verbindungsmittel (13) aufweisen.

## Claims

1. Piece of jewellery (1) comprising a metal load-bearing structure (2) and a plurality of covering elements (3a;3b;3c;3d;3e;3f;3g;3h) arranged in a row one after the other on the metal load-bearing structure (2), each covering element (3a;3b;3c;3d;3e;3f;3g;3h) having a through-opening through which the metal load-bearing structure (2) extends, in such a way that the covering elements are inserted on the metal load-bearing structure (2),
the metal load-bearing structure (2) being made up of a pair of wires (2a,2b), which are made of a so-called metal alloy having a shape memory (Shape Memory Alloy), are placed close to each other and are joined to each other, in particular they are welded to each other, only at their ends,
the through-opening of each of the covering elements (3a;3b;3c;3d;3e;3f;3g;3h) being made up of a pair of adjacent holes (4a,4b) and
both the first covering element and the last covering element of the row of covering elements (3a;3b;3c;3d;3e;3f;3g;3h) being also connected, in particular being welded, to the wires (2a,2b), while the other covering elements of the row of covering elements (3a;3b;3c;3d;3e;3f;3g;3h) are only inserted freely on the pair of wires (2a,2b) and can slide along it, **characterised in that** the two adjacent holes (4a,4b) are joined to each other on the internal side and, therefore, do not have an internal side wall of separation.

2. Piece of jewellery (1) according to claim 1, **characterised in that** the metal alloy having a shape memory (Shape Memory Alloy) is a metal alloy based on nickel and titanium.

3. Piece of jewellery (1) according to claim 2, **characterised in that** the diameter of the wires (2a,2b) is between 0.40 mm and 0.55 mm and **in that** the piece of jewellery (1) is a ring.

4. Piece of jewellery (1) according to claim 2, **characterised in that** the diameter of the wires (2a,2b) is between 0.75 mm and 0.85 mm and **in that** the piece of jewellery (1) is a bracelet or a necklace.

5. Piece of jewellery (1) according to one of claims 2 to 4, **characterised in that** each covering element (3a;3b;3c;3d;3e;3f;3g;3h) has a protrusion (6) and a recess (7) that extend in a direction parallel to the direction of longitudinal extension of the pair of adjacent holes (4a,4b), the protrusion (6) of a generic covering element (3a;3b;3c;3d;3e;3f;3g;3h) being suitable to be inserted into the recess (7) of one of the two covering elements that in the row are adjacent to the generic covering element (3a;3b;3c;3d;3e;3f;3g;3h) and the recess (7) of the generic covering element (3a;3b;3c;3d;3e;3f;3g;3h) being suitable to house the protrusion (6) of the other of the two covering elements that in the row are adjacent to the generic covering element (3a;3b;3c;3d;3e;3f;3g;3h).

6. Piece of jewellery (1) according to one of claims 2 to 5, **characterised in that** one or more or even all of the covering elements (3b;3c;3d;3e;3f;3g;3h) have at least one seat (5) intended to house in a fixed way an ornamental element (14).

7. Piece of jewellery (1) according to claim 6, **characterised in that** each seat (5) is delimited on the bottom by the surface of the respective covering element (3b;3c;3d;3e;3f;3g;3h) and laterally by a plurality of tips (8), at least three and in particular four tips (8) protruding from the surface of the respective covering element (3b;3c;3d;3e;3f;3g;3h) and being distributed in a uniform way along the perimeter of the seat (5).

8. Piece of jewellery (1) according to claim 7, **characterised in that** the seats (5) of two different covering elements (3b;3c;3d;3e;3f;3g;3h) have different shapes and sizes with respect to each other, depending on the physical characteristics of the ornamental element (14) which they house.

9. Piece of jewellery (1) according to claim 8, **characterised in that** on a same covering element (3g;3h) two seats (5) are provided, which are different from each other in size and shape.

10. Piece of jewellery (1) according to claim 8 or 7, **characterised in that** a supporting element (9) is provided, which connects to each other the tips (8) of the at least one seat (5).

11. Piece of jewellery (1) according to one of claims 2 to 10, **characterised in that** the ends of the wire (2a) are joined to each other, in particular they are welded to each other, and **in that** the ends of the wire (2b) are joined to each other, in particular they are welded to each other.

12. Piece of jewellery (1) according to one of claims 2 to 11, **characterised in that** it comprises two end elements (11a; 11b; 11c; 11d; 11e; 11f; 11g; 11h), which are respectively connected, in particular they are welded one to the first and the other to the last covering element of the row of covering elements (3a;3b;3c;3d;3e;3f;3g;3h) and they house inside a hollow (12) of them an end of the two wires (2a,2b).

13. Piece of jewellery (1) according to claim 12, **characterised in that** each of the two end elements (11b; 11c; 11d; 11e; 11f; 11g; 11h) has at least one seat (5) and at least one additional seat (5a), the main plane of the at least one additional seat (5a) being placed at an angle with respect to the main plane of the at least one seat (5).

14. Piece of jewellery (1) according to one of claims 2 to 13, **characterised in that** at least two covering elements (3a;3b;3c;3d;3e;3f;3g;3h) have reciprocal connection means (13).

## Revendications

1. Bijou (1) comprenant une structure portante métallique (2) et une pluralité d'éléments de revêtement (3a;3b;3c;3d;3e;3f;3g;3h) disposés en succession en file une à l'autre sur la structure portante métallique (2), chaque élément de revêtement (3a;3b;3c;3d;3e;3f;3g;3h) présentant une ouverture passante à travers laquelle s'étend la structure portante métallique (2), de manière que les éléments de revêtement soient enfilés sur la structure portante métallique (2),
la structure portante métallique (2) étant constituée par une paire de fils (2a,2b), que sont réalisés en un alliage métallique dit à mémoire de forme (Shape Memory Alloy), sont disposés l'un à côté de l'autre et sont unis l'un à l'autre, en particulier sont soudés l'un à l'autre, seulement à leurs extrémités,
l'ouverture passante de chacun des éléments de revêtement (3a;3b;3c;3d;3e;3f;3g;3h) étant constituée par une paire de trous l'un à côté de l'autre (4a,4b) et
soit le premier élément de revêtement soit le dernier élément de revêtement de la file des éléments de revêtement (3a;3b;3c;3d;3e;3f;3g;3h) étant de plus relié, en particulier soudé, aux fils (2a,2b), alors que les autres éléments de revêtement de la file des éléments de revêtement (3a;3b;3c;3d;3e;3f;3g;3h) sont enfilés librement sur la paire de fils (2a.2b) et peuvent parcourir le long de celle-ci, **caractérisé par le fait que** les deux trous l'un à côté de l'autre (4a,4b) sont unis entre eux sur le côté intérieur et ne présentent donc pas une paroi latérale interne de séparation.

2. Bijou (1) selon la revendication 1, **caractérisé par le fait que** l'alliage métallique à mémoire de forme (Shape Memory Alloy) est un alliage métallique à base de nickel et titane.

3. Bijou (1) selon la revendication 2, **caractérisé par le fait que** le diamètre des fils (2a,2b) est compris entre 0,40 mm et 0,55 mm et que le bijou (1) est un anneau.

4. Bijou (1) selon la revendication 2, **caractérisé par le fait que** le diamètre des fils (2a,2b) est compris entre 0,75 mm et 0,85 mm et que le bijou (1) est un bracelet ou un collier.

5. Bijou (1) selon une des revendications de 2 à 4, **caractérisé par le fait que** chaque élément de revêtement (3a;3b;3c;3d;3e;3f;3g;3h) présente une saillie (6) et un renfoncement (7) qui s'étendent le long d'une direction parallèle à celle d'extension longitudinale de la paire de trous l'un à côté de l'autre (4a,4b), la saillie (6) d'un élément de revêtement générique (3a;3b;3c;3d;3e;3f;3g;3h) étant apte à s'insérer dans le renfoncement (7) d'un des deux éléments de revêtement qui dans la file sont adjacents à l'élément de revêtement générique (3a;3b;3c;3d;3e;3f;3g;3h) et le renfoncement (7) de l'élément de revêtement générique (3a;3b;3c;3d;3e;3f;3g;3h) étant apte à accueillir la saillie (6) de l'autre des deux éléments de revêtement qui dans la file sont adjacents à l'élément de revêtement générique (3a;3b;3c;3d;3e;3f;3g;3h).

6. Bijou (1) selon une des revendications de 2 à 5, **caractérisé par le fait qu'**un ou plusieurs ou bien tous les éléments de revêtement (3b;3c;3d;3e;3f;3g;3h) présentent au moins un siège (5) destiné à accueillir de manière fixe un élément ornemental (14).

7. Bijou (1) selon la revendication 6, **caractérisé par le fait que** chacun siège (5) est délimité sur le fond par la surface du respectif élément de revêtement (3b;3c;3d;3e;3f;3g;3h) et latéralement par une pluralité des pointes (8), au moins trois et en particulier quatre pointes (8), qui saillent de la surface du respectif élément de revêtement (3b;3c;3d;3e;3f;3g;3h) et sont distribuées de manière uniforme le long du périmètre du siège (5).

8. Bijou (1) selon la revendication 7, **caractérisé par le fait que** les sièges (5) de deux différents éléments de revêtement (3b;3c;3d;3e;3f;3g;3h) présentent des formes et dimensions diverses entre elles, selon les caractéristiques physiques de l'élément ornemental (14) qu'ils accueillent.

9. Bijou (1) selon la revendication 8, **caractérisé par le fait que** sur un même élément de revêtement (3g;3h) sont prévus deux sièges (5) de diverses dimensions et formes.

10. Bijou (1) selon la revendication 8 ou 7, **caractérisé par le fait qu'**on prévoit un élément de soutien (9) qui lie entre elles les pointes (8) de l'au moins un siège (5).

11. Bijou (1) selon une des revendications de 2 à 10, **caractérisé par le fait que** les extrémités du fil (2a) sont unies l'une à l'autre, en particulier sont soudées l'une à l'autre, et que les extrémités du fil (2b) sont unies l'une à l'autre, en particulier sont soudées l'une à l'autre.

12. Bijou (1) selon une des revendications de 2 à 11, **caractérisé par le fait** de comprendre deux éléments d'extrémité (11a; 11b; 11c; 11d; 11e; 11f; 11g; 11h), lesquels sont respectivement reliés, en particulier soudés l'un au premier et l'autre au dernier élément de revêtement de la file des éléments de revêtement (3a;3b;3c;3d;3e;3f;3g;3h) et accueillent à l'intérieur d'une leur cavité (12) une extrémité des deux fils (2a,2b).

13. Bijou (1) selon la revendication 12, **caractérisé par le fait que** chacun des deux éléments d'extrémité (11b; 11c; 11d; 11e; 11f; 11g; 11h) présente soit au moins un siège (5) soit au moins un ultérieur siège (5a), le plan principal de l'au moins un ultérieur siège (5a) étant disposé angulé par rapport au plan principal de l'au moins un siège (5).

14. Bijou (1) selon une des revendications de 2 à 13, **caractérisé par le fait qu'**au moins deux éléments de revêtement (3a;3b;3c;3d;3e;3f;3g;3h) présentent des moyens pour une liaison réciproque (13).
